(19) Europäisches Patentamt

European Patent Office

Office européen des brevets

(11) **EP 3 348 609 A1**

(12) **EUROPEAN PATENT APPLICATION**
published in accordance with Art. 153(4) EPC

(43) Date of publication:
**18.07.2018 Bulletin 2018/29**

(21) Application number: **16844146.7**

(22) Date of filing: **18.08.2016**

(51) Int Cl.:
*C08J 5/24* (2006.01)        *B32B 5/10* (2006.01)
*B32B 7/02* (2006.01)        *B32B 15/08* (2006.01)
*C08J 5/04* (2006.01)        *C09J 5/06* (2006.01)
*C09J 7/02* (2006.01)        *C09J 7/04* (2006.01)
*C09J 157/00* (2006.01)        *C09J 163/00* (2006.01)
*C09J 201/00* (2006.01)

(86) International application number:
**PCT/JP2016/074152**

(87) International publication number:
**WO 2017/043283 (16.03.2017 Gazette 2017/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.09.2015 JP 2015178128**

(71) Applicant: **Sekisui Plastics Co., Ltd.**
**Osaka-shi, Osaka 530-0047 (JP)**

(72) Inventors:
• **OKAMOTO, Koichiro**
  **Tenri-shi**
  **Nara 632-0007 (JP)**
• **NISHIUMI, Kengo**
  **Tenri-shi**
  **Nara 632-0007 (JP)**
• **SASAHARA, Shuichi**
  **Tenri-shi**
  **Nara 632-0007 (JP)**

(74) Representative: **Hoffmann Eitle**
**Patent- und Rechtsanwälte PartmbB**
**Arabellastraße 30**
**81925 München (DE)**

(54) **METAL PANEL REINFORCEMENT MATERIAL AND METHOD FOR REINFORCING METAL PANEL**

(57) A metal panel reinforcing material comprising a resin composition, including a plastic component that has at least curability and is for a crosslinked polymer matrix, a curing agent for the plastic component, a curing accelerator for the plastic component, and a crosslinked polymer matrix, and a sheet-like fiber substrate, in which when the metal panel reinforcing material is stuck to a metal panel having a thickness of 0.8 mm and heated to be integrated into a reinforced metal panel, the metal panel reinforcing material exhibits the following properties to said metal panel: in three-point bending measured at a span of 100 mm, (i) a strength improvement rate of strength at 1 mm displacement is 120% or more, (ii) a maximum strength improvement rate is 200% or more, and (iii) a strain energy up to a maximum point is 0.5 N•m or more.

Printed by Jouve, 75001 PARIS (FR)

EP 3 348 609 A1

**Description**

TECHNICAL FIELD

The present invention relates to a metal panel reinforcement (reinforcing) material and a method for reinforcing a metal panel. More particularly, the present invention relates to a metal panel reinforcing material for enhancing rigidity of a metal panel such as a steel plate and an aluminum alloy plate, which are used in transportation equipment, a metal case or the like, and a method of reinforcing a metal panel.

BACKGROUND TECHNOLOGY

A metal panel such as a steel plate and an aluminum alloy plate, which are used in transportation equipment (for example, vehicle body), a metal case or the like, tends to be thin for reducing the weight. In recent years, a metal panel having a thickness of about 0.6 to 0.8 mm has been mainly used. For this reason, the metal panel has a problem that it becomes easy to be deformed or buckled with weak force, and distortion is generated to deteriorate appearance. Additionally, in a thin metal panel, since rigidity and impact resistance are reduced, safety of a passenger for collision may be impaired, in a vehicle body of transportation equipment. For that reason, at a site at which collision is supposed, further enhancement of rigidity of the metal panel is required.

Conventionally, reinforcement of the site of the metal panel requiring rigidity has been performed by a method of sticking a sheet-like reinforcing material on an inner side to integrate it with the metal panel. As the reinforcing material, a reinforcing material which is obtained by blending a liquid rubber, a solid rubber, a curing agent, a filler, a blowing agent, and various additives into an alkyd resin, an epoxy resin, an acrylic resin, a urethane resin, a urea resin or the like, kneading them with a calendar roll, pressing the kneading product into a sheet shape, and processing it into the predetermined thickness is known. This reinforcing material reinforces the metal panel, by sticking it to the metal panel and curing it by heating.

As the metal panel reinforcing material, for example, in Patent Document 1 (Japanese Unexamined Patent Application, First Publication No. 2005-139218), a laminate of a constrained layer such as a glass cloth and a sheet-like resin layer composed of a heat-expansion curable resin composition has been proposed. In the resin composition herein, a NBR rubber, a SBR rubber, a filler, a blowing agent, an epoxy-based resin, and a curing agent thereof are contained. It is stated that the resin layer after heating expansion curing imparts a high rigidity and a great bending strength to the metal panel. Additionally, in Patent Document 2 (Japanese Unexamined Patent Application, First Publication No. 2008-105688), although formulation is similar to that of Patent Document 1, a non-expanding metal panel reinforcing material containing a hollow inorganic filler such as a glass balloon has been proposed.

PRIOR ART DOCUMENTS

Patent Documents

Patent Document 1: Japanese Unexamined Patent Application, First Publication No. 2005-139218
Patent Document 2: Japanese Unexamined Patent Application, First Publication No. 2008-105688

SUMMARY OF THE INVENTION

PROBLEM TO BE SOLVED BY THE INVENTION

Since the resin layers of Patent Documents 1 and 2 are, however, susceptible to brittle fracture and also have the small break point strain, there was a problem that the energy necessary for fracture becomes small. Since this problem leads to reduction in safety of a passenger, for example, in automobiles, the resin layer has also been required to have toughness. In addition, it has been desired that the metal panel reinforcing material exhibits a provisional adhering force due to tackiness at the initial state, is able to be temporarily tacked, is excellent in workability of an adhering operation, and moreover, is cured by a simple operation due to heat treatment to manifest rigidity.

MEANS FOR SOLVING THE PROBLEM

The present invention was made in view of the above-mentioned problem, and an object of the present invention is to provide a metal panel reinforcing material which secures lightness and rigidity while exhibiting sufficient a provisional adhering force due to tackiness at the initial state, has the great break point strain, and can impart toughness to the metal panel by heat curing. The present inventors intensively studied in order to solve the above-mentioned problem, and as a result, found out that a metal panel reinforcing material, comprising a resin composition including a plastic component that has at least curability and is for a crosslinked polymer matrix, a curing agent for the plastic component, a curing accelerator for the plastic component, and a crosslinked polymer matrix, and a sheet-like fiber substrate, as well as having specific properties, can solve the above-mentioned problem, resulting in completion of the present invention.

Thus, according to the present invention, there is provided a metal panel reinforcing material comprising:

a resin composition including a plastic component that has at least curability and is for a crosslinked polymer matrix, a curing agent for the plastic component, a curing accelerator for the plastic component, and a crosslinked polymer matrix; and
a sheet-like fiber substrate,
wherein
when the metal panel reinforcing material is stuck to a metal panel having a thickness of 0.8 mm and heated to be integrated into a reinforced metal panel, the metal panel reinforcing material exhibits the following properties to the metal panel: in three-point bending measured at a span of 100 mm,

(i) a strength improvement rate of strength at 1 mm displacement is 120% or more,
(ii) a maximum strength improvement rate is 200% or more, and
(iii) a strain energy up to a maximum point is 0.5 N•m or more.

Additionally, according to the present invention, there is provided a method for reinforcing a metal panel, the method comprising:

sticking the metal panel reinforcing material to a metal adherend for temporal tacking; and
heat-curing a resulting material at 150 to 250°C.

EFFECTS OF INVENTION

According to the present invention, there can be provided a metal panel reinforcing material which secures lightness and rigidity while exhibiting a sufficient provisional adhering force due to tackiness at the initial state, has the great breaking strain, and can impart toughness to the metal panel due to heat curing.

Additionally, there can be provided a metal panel reinforcing material which secures a higher provisional adhering force, lightness, and rigidity, has the great breaking strain, and can impart toughness to the metal panel due to heat curing, in the case of any one of or a combination of the followings.

(1) The metal panel reinforcing material exhibits a pressure-sensitive adhering force of 0.01 to 0.5 N/mm$^2$.
(2) The sheet-like fiber substrate is a laminate of different two or more sheet-like fiber substrates selected from a non-woven fabric and a woven fabric composed of an inorganic fiber or an organic fiber.
(3) The sheet-like fiber substrate is a woven fabric or a unidirectional cloth of an inorganic fiber and is positioned on one side surface layer of the metal panel reinforcing material.
(4) The crosslinked polymer matrix is a copolymer of a monofunctional monomer containing one polymerizable functional group and a polyfunctional monomer containing two or more polymerizable functional groups.
(5) The plastic component is a liquid epoxy-based resin exhibiting a viscosity in a range of 500 to 30,000 mPa•s at a temperature of 25°C, and the liquid epoxy-based resin contains at least one component having a benzene skeleton.
(6) The curing agent contains at least dicyandiamide.
(7) The curing accelerator is an amine-based or imidazole-based curing accelerator.
(8) The metal panel is selected from a steel plate and an aluminum alloy plate having a thickness of 3 mm or less.

Furthermore, according to the method for reinforcing a metal panel using the above-mentioned metal panel reinforcing material, securement of lightness and rigidity to a metal panel, and impartation of the great breaking strain and toughness can be simply performed.

BEST MODE FOR CARRYING OUT THE INVENTION

The metal panel reinforcing material and the method for reinforcing a metal panel related to the present invention will be illustrated in more detail below. The present invention is not limited to the following illustration and can be variously changed in the scope of the purport thereof.

(Metal Panel Reinforcing Material)

The metal panel reinforcing material (hereinafter, simply also referred to as reinforcing material) comprises a resin composition including a plastic component that has at least curability and is for a crosslinked polymer matrix, a curing agent for the plastic component, a curing accelerator for the plastic component, and a crosslinked polymer matrix; and a sheet-like fiber substrate. Additionally, when the reinforcing material is stuck to a metal panel having a thickness of 0.8 mm and heated to be integrated into a reinforced metal panel, the reinforcing material exhibits the following properties to the metal panel before reinforcement:
in three-point bending which is measured at a span of 10 mm,

(i) a strength improvement rate of strength at 1 mm displacement is 120% or more,
(ii) the maximum strength improvement rate is 200% or more, and
(iii) a strain energy up to the maximum point is 0.5 N•m or more.

The above-mentioned heating is performed at 180°C for 20 minutes.

When a strength improvement rate is less than 120%, rigidity of a reinforced metal panel may be inferior. The strength improvement rate can take 120%, 140%, 200%, 250%, 300%, 350%, 400%, 500%, 600%, 700%, 800%, 900%, and 1,000%. The strength improvement rate is not particularly limited, but in order to obtain reinforcing property which is sufficient for practical use, the strength improvement rate is preferably 140% or more, and more preferably 200% or more.

When a maximum strength improvement rate is less than 200%, rigidity of a reinforced metal panel may be inferior. The strength improvement rate can take 200%, 250%, 300%, 350%, 400%, 500%, 600%, 700%, 800%, 900%, and 1,000%. The strength improvement rate is not particularly limited, but in order to obtain reinforcing property which is sufficient for practical use, the strength improvement rate is preferably 250% or more, and more preferably 300% or more.

When the strain energy up to a maximum point is less than 0.5 N•m, impact absorbability of a reinforced metal panel may be inferior. The strain energy can take 0.5 N•m, 0.7 N•m, 1.0 N•m, 1.2 N•m, 1.5 N•m, 1.7 N•m, 2.0 N•m, 2.2 N•m, 2.5 N•m, 2.7 N•m, and 3.0 N•m. The strain energy is not particularly limited, but in order to obtain impact absorbability which is sufficient for practical use, the strain energy is preferably 1.0 N•m or more, and more preferably 1.5 N-m or more.

It is preferable that the reinforcing material exhibits a pressure-sensitive adhering force of 0.01 to 0.5 N/mm$^2$. When a pressure-sensitive adhering force is less than 0.01 N/mm$^2$, a pressure-sensitive adhering force to the metal panel may not be sufficient. When a pressure-sensitive adhering force is higher than 0.5 N/mm$^2$, a pressure-sensitive adhering force is too strong to reduce workability. A pressure-sensitive adhering force can take 0.01 N/mm$^2$, 0.05 N/mm$^2$, 0.1 N/mm$^2$, 0.15 N/mm$^2$, 0.2 N/mm$^2$, 0.25 N/mm$^2$, 0.3 N/mm$^2$, 0.35 N/mm$^2$, 0.4 N/mm$^2$, 0.45 N/mm$^2$, and 0.5 N/mm$^2$. A more preferable pressure-sensitive adhering force is 0.05 to 0.3 N/mm$^2$.

The thickness of the reinforcing material is not particularly limited, as far as it is such thickness that a shape of the reinforcing material can be maintained at the time of working. The thickness is, for example, 0.1 to 5 mm.

(1) Plastic Component

The plastic component is not particularly limited, as far as it imparts plasticity to a crosslinked polymer matrix, and it itself has curability. Examples thereof include the known epoxy resin which is generally used in an epoxy resin adhesive.

Examples of the epoxy resin include bisphenol type epoxy resins such as bisphenol F type and bisphenol A type, a novolak type epoxy resin, a biphenyl type epoxy resin, a dicyclopentadiene type epoxy resin, a naphthalene type epoxy resin, a cyclohexane type epoxy resin, a hydrogenated bisphenol A type epoxy resin, a cyclohexene oxide type epoxy resin, a glycidylamine type epoxy resin, and the like. Among them, since bisphenol type epoxy resins such as a bisphenol F type and a bisphenol A type, and a novolak type epoxy resin are excellent in the balance between performance such as the adhering strength, durability, impact resistance, and heat resistance, and the cost, they are preferable. It is preferable that the epoxy-based resin is a liquid material having a viscosity in a range of 500 to 30,000 mPa•s at a temperature of 25°C. The viscosity can take 500 mPa•s, 1,000 mPa•s, 3,000 mPa•s, 5,000 mPa•s, 10,000 mPa•s, 15,000 mPa•s, 20,000 mPa•s, 25,000 mPa•s, and 30,000 mPa•s. In addition, the viscosity of the epoxy-based resin is a value which is measured at a test temperature of 25°C, using a Brookfield-type rotational viscometer, according to JIS K 7117-1 (1999).

**(2) Curing Agent**

The curing agent is not particularly limited, as far as it has reactivity with the above-mentioned plastic component. Examples of the curing agent include an amine-type curing agent, an acid anhydride, a novolak resin, phenol, mercaptan, a Lewis acid amine complex, an onium salt, imidazole, and the like. Examples of the amine-type curing agent include aromatic amine such as diaminodiphenylmethane and diaminodiphenylsulfone, aliphatic amine, imidazole derivative, dicyandiamide, tetramethylguanidine, thiourea-added amine and the like, and an isomer and a modified body thereof, and the like. Examples of the curing agent other than the amine type include imidazole derivatives such as 4,4-diaminodiphenylsulfone and 2-n-heptadecylimidazole, isophthalic acid dihydrazide, N,N-dialkylurea derivative, N,N-dialkylthiourea derivative, acid anhydrides such as tetrahydrophthalic anhydride, isophoronediamine, m-phenylenediamine, N-aminoethylpiperazine, melamine, guanamine, boron trifluoride complex compound, trisdimethylaminomethylphenol, polythiol, and the like. Among them, the amine type curing agent is preferable, and dicyandiamide is particularly preferable. The curing agents may be used alone or may be used by combining two or more of them.

The content of the curing agent is not particularly limited, but an optimal amount may be different depending on a kind of the curing agent. For example, the curing agent can be preferably used at an optimal amount for every each curing agent, which has previously been known. As this optimal amount, an amount described, for example, in Chapter 3 of "Review Epoxy Resins Fundamentals" (The Japan Society of Epoxy Resin Technology, published in 2003) can be adopted.

For example, the amount can take 0.01 parts by mass, 0.05 parts by mass, 0.1 parts by mass, 0.5 parts by mass, 1.5 parts by mass, 10 parts by mass, 15 parts by mass, 20 parts by mass, 25 parts by mass, and 30 parts by mass, based on 100 parts by mass of the plastic component.

**(3) Curing Accelerator**

A curing accelerator is a condensation catalyst for promoting curing of the reinforcing material. Examples of the curing accelerator include an amine-based curing accelerator, an imidazole-based curing accelerator, and a derivative thereof. Specifically, examples thereof include urea derivatives such as 1,1'-(4-methyl-1,3-phenylene)bis(3,3-dimethylurea), phenyl-dimethylurea, methylene-diphenyl-bisdimethylurea, 3-phenyl-1,1-dimethylurea, 3-(3,4-dichlorophenyl)-N,N-dimethylurea (DCMU), and 3-(3-chloro-4-methylphenyl)-1,1-dimethylurea; tertiary amine; imidazole derivatives such as 2-undecylimidazole (C11Z), 2-heptadecylimidazole (C17Z), 2-phenylimidazole (2PZ), and 1,2-dimethylimidazole (1,2DMZ); urea compounds such as phenyldimethylurea (PDMU); amine complexes such as monoethylamine trifluoride, amine trichloride complex; and the like.

Among them, when dicyandiamide is used as the curing agent, an amine-based curing agent, an imidazole-based curing agent having the function as a crosslinking amine and a promotion catalyst, and a derivative thereof are suitably used. Examples of the amine-based curing agent include 3-(3,4-dichlorophenyl)-N,N-dimethylurea (DCMU), and examples of the imidazole-based curing agent include 2-heptadecylimidazole (C17Z).

As the curing accelerator, DCMU is particularly preferable.

The content of the curing accelerator is preferably 0.1 to 15 parts by mass based on 100 parts by mass of the plastic component. The content can take 0.1 parts by mass, 0.5 parts by mass, 1 part by mass, 5 parts by mass, 10 parts by mass, and 15 parts by mass. The further preferable content is 1 to 10 parts by mass.

**(4) Crosslinked Polymer Matrix**

The content of the crosslinked polymer matrix can take 1 part by mass, 0.5 parts by mass, 1 part by mass, 5 parts by mass, 10 parts by mass, and 15 parts by mass, based on 100 parts by mass of the plastic component.

It is preferable that the crosslinked polymer matrix is composed of a (meth)acrylic-based resin. The (meth)acrylic-based resin is not particularly limited, as far as it is a resin which constitutes the polymer matrix, and can include the plastic component, the curing agent, and the curing accelerator in the matrix. It is preferable that the (meth)acrylic-based resin has a benzene skeleton. Examples of the (meth)acrylic-based resin include resins derived from a copolymer of a monofunctional (meth)acrylic-based monomer and a polyfunctional (meth)acrylic-based monomer.

The monofunctional (meth)acrylic-based monomer means a monomer in which one (meth)acryloyl group is contained in one molecule. An example thereof is an aromatic or aliphatic alcohol having at least one hydroxy group in a molecule, and (meth)acrylate which is obtained by reacting an alkylene oxide adduct thereof and (meth)acrylic acid, and (meth)acrylamide or a (meth)acrylamide derivative. Examples of the (meth)acrylate include specifically aliphatic (meth)acrylic-based monomers such as ethyl (meth)acrylate, n-butyl (meth)acrylate, cyclohexyl (meth)acrylate, 2-ethylhexyl (meth)acrylate, isobornyl (meth)acrylate, tetrahydrofurfuryl (meth)acrylate, 4-hydroxybutyl (meth)acrylate, 2-hydroxyethyl (meth)acrylate, 1,10-decanediol (meth)acrylate, and 1,9-nonanediol (meth)acrylate; (meth)acrylic-based monomers having a benzene skeleton such as benzyl (meth)acrylate, phenoxyethyl (meth)acrylate, phenyl diethyleneglycol (meth)acrylate, 2-hydroxy-3-phenoxypropyl (meth)acrylate, methylphenoxyethyl (meth)acrylate, and ethoxylated orthophenylphenol (meth)acrylate; (meth)acrylic-based monomers having an epoxy group such as glycidyl (meth)acrylate and 4-hydroxybutyl (meth)acrylate glycidyl ether; and the like.

Examples of the (meth)acrylamide or the (meth)acrylamide derivative include specifically tert-butylacrylamidesulfonic acid (TBAS), tert-butylacrylamidesulfonic acid salt, N,N-dimethylaminoethylacrylamide (DMAEAA) hydrochloride, N,N-dimethylaminopropylacrylamide (DMAPAA) hydrochloride, (meth)acrylamide, N-methyl(meth)acrylamide, N-ethyl(meth)acrylamide, N-propyl(meth)acrylamide, N,N-dimethyl(meth)acrylamide, N,N-diethyl(meth)acrylamide, acryloylmorpholine, and the like.

The polyfunctional (meth)acrylic-based monomer means (meth)acrylate in which two or more (meth)acryloyl groups are contained in one molecule. Examples thereof include cyclohexanedimethanol di(meth)acrylate, cyclohexanedimethanol (meth)acrylate, dimethyloltricyclodecane di(meth)acrylate, ethylene glycol di(meth)acrylate, propylene glycol di(meth)acrylate, 1,4-butanediol di(meth)acrylate, hexanediol di(meth)acrylate, diethylene glycol di(meth)acrylate, and the like.

In addition to them, as the polyfunctional (meth)acrylic-based monomer, urethane-based (meth)acrylate, polyester-based (meth)acrylate, polyether-based (meth)acrylate, epoxy-based (meth)acrylate, diene polymer-based (meth)acrylate, and the like can be suitably used.

The urethane-based (meth)acrylate refers to, for example, (meth)acrylate having a urethane bond in a molecule. The urethane-based (meth)acrylate can be obtained, for example, by esterifying polyurethane, which is obtained by a reaction between polybutadiene diol, polyether polyol, polyester polyol, polycarbonate diol or the like and polyisocyanate, with (meth)acrylic acid. Polybutadiene-modified urethane-based (meth)acrylate which is obtained by (meth)acryl-modifying polybutadiene is also included in the urethane-based (meth)acrylate. Hydrogenated polybutadiene-modified urethane-based (meth)acrylate which is obtained by (meth)acryl-modifying hydrogenated polybutadiene is also included in the urethane-based (meth)acrylate. Examples of the urethane-based (meth)acrylate include 1,2-polybutadiene-modified urethane-based (meth)acrylate, polyester urethane-based (meth)acrylate, dibutylene glycol urethane-based (meth)acrylate, polycarbonate urethane-based (meth)acrylate, polyether urethane-based (meth)acrylate, and the like.

The polyester-based (meth)acrylate can be obtained, for example, by esterifying a hydroxy group of polyester having a hydroxy group on both ends, which is obtained by condensation of polyvalent carboxylic acid and polyhydric alcohol, with (meth)acrylic acid, or by esterifying a hydroxy group on an end, which is obtained by adding alkylene oxide to polyvalent carboxylic acid, with (meth)acrylic acid.

The polyether-based (meth)acrylate can be obtained, for example, by esterifying a hydroxy group of polyether polyol with (meth)acrylic acid.

The epoxy-based (meth)acrylate can be obtained, for example, by reacting an oxirane ring of a bisphenol-type epoxy resin or a novolak-type epoxy resin having a relatively low molecular weight, with (meth)acrylic acid, to perform esterification. Additionally, a carboxyl-modified type epoxy (meth)acrylate in which this epoxy-based (meth)acrylate has been partially modified with dibasic carboxylic acid anhydride can also be used.

Examples of the diene polymer-based (meth)acrylate include SBR di(meth)acrylate which is obtained by (meth)acryl-modifying a liquid styrene-butadiene copolymer, a polyisoprene di(meth)acrylate which is obtained by (meth)acryl-modifying polyisoprene, and the like.

It is preferable that at least one of a monofunctional (meth)acryl-based monomer and a polyfunctional (meth)acryl-based monomer has an epoxy group. By existence of an epoxy group in an acryl gel skeleton, a plasticizer and the acryl gel skeleton are chemically bonded at the time of curing of an epoxy resin, and a stronger adhesion strength can be obtained.

A method of polymerizing the above-mentioned monofunctional (meth)acrylic-based monomer and polyfunctional (meth)acrylic-based monomer is not particularly limited, but examples thereof include bulk polymerization, solution polymerization, suspension polymerization, emulsion polymerization, and the like. A polymerization reaction in the above-mentioned method of copolymerization is not particularly limited, but examples thereof include a free radical polymerization reaction, a living radical polymerization reaction, a living anionic polymerization reaction, and the like. The above-mentioned polymerization reaction can be initiated, for example, by imparting the energy such as heat, ultraviolet rays, and electron beam. Alternatively, in the above-mentioned polymerization reaction, upon polymerization, a reaction initiator may be used.

The mass ratio of the monofunctional (meth)acrylic-based monomer and the polyfunctional (meth)acrylic-based monomer can take 1 : 1, 5 : 1, 10 : 1, 20 : 1, 30 : 1, and 50 : 1.

(5) Sheet-like Fiber Substrate

As the sheet-like fiber substrate, the known sheet-like fiber substrates can be used, and examples thereof include specifically a woven fabric, a non-woven fabric, a unidirectional cloth, and the like which are obtained by weaving or opening inorganic fibers such as a glass fiber and a carbon fiber, or organic fibers such as a polyester fiber, a polyamide fiber, an aramid fiber, a vinylon fiber, and a polyolefin fiber. It is preferable that the metal panel reinforcing material is constituted by laminating different two or more sheet-like fiber substrates selected from the above-mentioned known sheet-like fiber substrates, and further, it is preferable that at least one kind is a woven fabric or a unidirectional cloth of an inorganic fiber and is positioned on one side surface layer of the metal panel reinforcing material.

The woven fabric or the unidirectional cloth of an inorganic fiber positioned on one side surface layer of the metal panel reinforcing material imparts toughness to a resin layer after curing (hereinafter, referred to as cured body layer), is preferably formed of a material which is sheet-like, is light, can be brought into close contact with a cured body layer, and integrated with the cured body layer, and as such a material, for example, a woven fabric of a carbon fiber, a woven fabric of a glass fiber (glass cloth), or a unidirectional reinforced cloth having rigidity is used.

The glass cloth may be cloth which has been prepared from a glass fiber, and more specifically, examples thereof include the known glass cloth which is obtained by weaving a glass fiber bundle in which a plurality of glass filaments have been bundled. The weave texture in the glass cloth is, usually a plain weave in general, but is not limited to this, and for example, may be a modified plain weave such as a basket weave and a rib weave, a twill weave, a satin weave or the like. Preferable is a plain weave. Additionally, concerning the driving density of the glass fiber bundle, weaving is performed so that the mass (basis weight) of the glass cloth before coating treatment with a resin becomes 150 to 300 g/m$^2$, and preferably 180 to 260 g/m$^2$. In addition, the mass of the glass cloth can be calculated by a measuring method in accordance with JIS R3420 7.2. Additionally, in the thus woven glass cloth, usually, the thickness is 100 to 300 $\mu$m and air permeability is 2 to 20 cm$^3$/cm$^2$/sec. In addition, air permeability can be calculated by a measuring method in accordance with JIS R3420 7.14.

As the glass cloth, more specifically, for example, a glass cloth having a count of glass fiber bundle of 5 to 250 tex (tex count), a glass filament diameter of 3 to 13 $\mu$m, the number of bundles of 100 to 800, a twist number of glass fiber bundle of 0.1 to 5.0 times/25 mm, and a driving density of glass fiber bundle of 30 to 80 bundles/25 mm may be used. Additionally, in order to enhance fiber impregnation of the epoxy resin, the glass cloth may be treated with a silane coupling agent. As such a silane coupling agent, specifically, for example, vinyltrichlorosilane, vinyltriethoxysilane, vinyltris($\beta$-methoxyethoxy)silane, $\gamma$-methacryloxypropyltrimethoxysilane, $\gamma$-aminopropyltriethoxysilane, $\gamma$-anilinopropyltrimethoxysilane, N-$\beta$-aminoethyl-$\gamma$-aminopropyltrimethoxysilane, N-vinylbenzyl-aminoethyl-$\gamma$-aminopropyltrimethoxysilane (hydrochloride), $\gamma$-glycidoxypropyltrimethoxysilane, $\beta$-(3,4-epoxycyclohexyl)ethyltrimethoxysilane, $\gamma$-mercatopropyltrimethoxysilane, $\gamma$-chloropropyltrimethoxysilane, and the like are used. These silane coupling agents may be used alone or may be used in combination. Among them, preferably, $\gamma$-glycidoxypropyltrimethoxysilane is used. An amount of this silane coupling agent to be attached to the glass cloth is, for example, 0.01 to 2% by weight, preferably 0.05 to 0.5% by weight, based on the glass cloth.

Furthermore, a glass fiber bundle is woven to obtain a glass cloth (including a glass cloth which has been attachment-treated with a sizing agent and a glass cloth which has been attachment-treated with a silane coupling agent), thereafter, opening treatment such as ultrasonic treatment with a high pressure water stream or in liquid is performed, to widen a warp and a weft of the glass fiber bundle, thereby, an opening-treated glass cloth which has been clogged to some extent can also be used.

A sheet-like fiber substrate other than the woven fabric or the unidirectional cloth of an inorganic fiber positioned on one side surface layer of the metal panel reinforcing material is mainly for increasing the thickness contributing to rigidity of a resin layer after curing, it is preferable that the substrate is formed of a material which is sheet-like, is light, can be brought into close contact with a cured body layer, and integrated with the cured body layer. Examples of such a material include a non-woven fabric, a laminated fabric, a chopped strand mat, and the like, and examples of a material constituting it include one or two or more kinds selected from a polyester fiber, a polyamide fiber, an aramid fiber, a vinylon fiber, a carbon fiber, a glass fiber, a polyolefin fiber, and the like. Additionally, it is preferable that a fiber has been treated with a silane coupling agent in order to enhance fiber impregnation of an epoxy resin.

The glass non-woven fabric may be of a sheet-like shape, in which fibers are entangled without weaving them, and more specifically, is a glass non-woven fabric in which fibers are randomly accumulated and chemically or mechanically entangled by a dry paper making method, a wet paper making method, a spunbond method or the like, and the known glass non-woven fabric is used.

The thickness is preferably 0.1 to 5 mm and more preferably 0.4 to 2 mm. Additionally, the weight per unit area of the glass non-woven fabric is preferably 10 to 500 g/m$^2$ and more preferably 30 to 200 g/m$^2$, so that the fabric has the above-mentioned thickness.

(6) Others

A gel sheet may contain additives which are known in the art, such as a silane coupling agent, a stabilizer, a filler, a lubricant, a coloring agent, an ultraviolet absorbing agent, an antioxidant, an anti-aging agent, and a weathering stabilizer, as necessary.

(7) Method for Producing Reinforcing Material

The reinforcing material can be produced by passing through a step of molding a polymerizable composition, comprising a monomer mixture comprising a monofunctional (meth)acrylate monomer and a polyfunctional (meth)acrylate monomer for forming a polymer matrix, a polymerization initiator, a plastic component, and a curing agent, into a desired shape (molding step); and a step of polymerizing the monomer mixture in the polymerizable composition with the polymerization initiator (polymerization step). As the polymerization initiator, the known polymerization initiators depending on the energy such as heat, ultraviolet rays, and electron beam can be used.

(a) Molding Step

Molding into the reinforcing material is not particularly limited, and the known method can be adopted. Examples thereof include a method of pouring the polymerizable composition into a mold form having a desired shape. Examples of another method include a method of pouring the polymerizable composition between two protective films composed of resin film and retaining the poured composition at a constant thickness.

The sheet-like fiber substrate can be made to be contained in the reinforcing material, for example, as follows. Examples thereof include a method of arranging the sheet-like fiber substrate into a mold form before, during, and after pouring, upon pouring of the polymerizable composition into the mold form, in the molding step. Additionally, examples thereof also include a method of placing the sheet-like fiber substrate between one pair of reinforcing materials, by placing the sheet-like fiber substrate on the reinforcing material, and placing another reinforcing material thereon.

(b) Polymerization Step

The molded polymerizable composition becomes a reinforcing material by polymerizing the monomer mixture therein. Examples of polymerization include a free radical polymerization method, a living radical polymerization reaction, a living anionic polymerization reaction, and the like. The above-mentioned polymerization reaction can be initiated, for example, by imparting the energy such as heat, ultraviolet rays, and electron beam.

(Method of Reinforcing Metal Panel)

The reinforcing method includes a method of temporarily tacking a metal panel and a reinforcing material by sticking the above-mentioned reinforcing material to the metal panel (temporal tacking step), and a step of fixing the metal panel and the reinforcing material by curing the reinforcing material by heating the reinforcing material before pressure-sensitive adhesion or after pressure-sensitive adhesion of the reinforcing material (fixing step). The temporal fixing step utilizes a pressure-sensitive adhering force of the reinforcing material, and the fixing step utilizes an adhering force. Heating of the reinforcing material is usually performed in a range of 150 to 250°C. When a heating temperature is lower than 150°C, curing may become insufficient. When a heating temperature is higher than 250, the crosslinking density becomes high and the reinforcing material may become brittle. A heating temperature is preferably 180 to 200°C.

In addition, the metal panel is not particularly limited, as far as it is a metal panel for which reinforcement is desired because of thinning. Examples thereof include a steel plate, an aluminum alloy plate, and the like used in transportation equipment, metal case or the like. This reinforcing method is useful for the metal panel having a thickness of 3 mm or less.

EXAMPLES

The present invention will be further specifically illustrated below by way of Examples, but the present invention is not limited by them at all. First, methods of measuring various properties to be measured in Examples will be described.

(Evaluation of Pressure-Sensitive Adhering Force and Restorability)

The reinforcing material is cut into $3 \times 3$ cm, with a surface opposite to a surface on which a woven fabric substrate is positioned at a surface layer of the reinforcing material for measurement exists, facing up, another surface is stuck to a SUS plate which has been fixed with a double-sided tape (No. 5486 manufactured by Sliontec Ltd.), using a double sided tape (No. 5486 manufactured by Sliontec Ltd.), and a gel sheet is stuck to a SUS plate. In a probe tack test, measurement is performed using Texture Analyzer TX-AT (manufactured by EKO Instruments). As the probe, a probe made of SUS having a diameter of 10 mm is used. After a load is applied to a pressure-sensitive adhesive surface of the probe for 10 seconds with a load of 1,000 g, a maximum load (N) at the time of peeling of the probe at a speed of 10 mm/sec is measured. A pressure-sensitive adhering force is a value $(N/mm^2)$ which is obtained by dividing a maximum load (N) by an area of a pressure-sensitive adhesive surface.

Additionally, the reinforcing material after the probe tack test is observed visually and restorability is evaluated according to the following criteria.

○ ··· The trace of probe loading does not remain on a reinforcing material and the original shape is maintained.
× ··· The trace of probe loading remains on a reinforcing material, the material is recessed, and the original shape is not maintained.

(Bending Strength Improvement Rate and Strain Energy)

A peeling sheet of a metal panel reinforcing material of each Example and each Comparative Example is peeled, each metal panel reinforcing material sheet is stuck on an oil surface cold rolled steel plate (SPCC-SD) (manufactured by Nippon Testpanel Co., Ltd.) of 25 mm width × 150 mm length × 0.8 mm thickness as a metal panel, respectively, under the atmosphere at 20°C, and this is heated at 180°C for 20 minutes, thereby, a plasticizer component is cured to prepare a test piece.

Thereafter, in the state where a steel plate is upward, each test piece is supported at a span of 100 mm, and at a center in a longitudinal direction thereof, a bar for a test is fallen from above in a vertical direction at a compression speed of 5 mm/min, and after contact with the steel plate, the bending strength at 1 mm displacement (N) and a maximum point of the bending strength (N) of the test piece are measured. Additionally, a three-point bending strength test is performed similarly with only an oil surface cold rolled steel plate (SPCC-SD) having a thickness of 0.8 mm, and after contact with the steel plate, the bending strength at 1 mm displacement (N) and a maximum point of the bending strength (N) are measured. A strength improvement rate at 1 mm displacement [%] and a maximum point strength improvement rate [%] are calculated by the following equation.

$$\text{Strength improvement rate at 1 mm displacement } [\%] = (\text{bending strength at 1 mm}$$
$$\text{displacement of test piece reinforced with reinforcing material/bending strength at 1 mm}$$
$$\text{displacement of only steel plate}) \times 100$$

$$\text{Maximum point strength improvement rate } [\%] = (\text{maximum point of bending}$$
$$\text{strength of test piece reinforced with reinforcing material/maximum point of bending}$$
$$\text{strength of only steel plate}) \times 100$$

Additionally, a stress-strain curve obtained in the three-point strength test is integrated in an integration range from strain 0 [mm] to strain at a maximum point of the bending strength [mm] and a calculated area value is adopted as the strain energy [N•m].

(Basis Weight Measurement)

The metal panel reinforcing material of each Example and each Comparative Example is cut into width 25 mm and length 150 mm, the weight of this is measured with an electronic balance and converted into the weight per 1 m$^2$, thereby, the basis weight [g/m$^2$] is calculated.

(Examples 1 to 4)

The polyfunctional monomer and the functional monomer were mixed, a photopolymerization initiator was melted therein to obtain a monomer mixture, an epoxy resin, a curing agent, and a curing accelerator were added to the monomer mixture, to obtain a resin composition for producing a metal panel reinforcing material. Kinds and amounts of the polyfunctional monomer, the functional monomer, the photopolymerization initiator, the epoxy resin, the curing agent, and the curing accelerator are shown in Table 1.

Then, a plain weave glass cloth and a glass paper were placed on a peeling film (38 $\mu$m PET) in this order, a resin composition was poured from above it, further, a peeling film (38 $\mu$m PET) was placed, and the plain weave glass cloth and the glass paper were impregnated with the resin composition while pushing with a roll coater. Thereafter, UV was irradiated with a small UV polymerizing machine (J-cure1500, metal halide lamp type name MJ-1500L, manufactured by JATEC) under the condition of a conveyer speed of 0.4 m/min and a distance between works of 150 mm, so that an integrated light amount became about 7,500 mJ/cm$^2$, and a reinforcing material having a thickness of 0.7 mm was obtained.

(Comparative Examples 1 and 2)

An epoxy resin, an acrylonitrile butadiene rubber, a styrene butadiene rubber, a polybutene rubber, and as a filler, talc, calcium carbonate, and carbon black were mixed according to formulation of Table 2 and kneaded with a kneader at 120°C for 1 hour, a kneader temperature was lowered to 70°C, a curing agent, a curing accelerator, and a blowing agent were added, and further kneaded for 1 hour. Kinds and amounts of the acrylonitrile butadiene rubber, the styrene butadiene rubber, the polybutene rubber, talc, calcium carbonate, carbon black, the curing agent, the curing accelerator, and the blowing agent are shown in Table 2. The kneading product was taken out and pressed with a pressing machine to mold it into a sheet. A satin weave glass cloth prepreg was stuck to one side of the sheet, and further, pressed with a pressing machine to the thickness of 0.7 mm to mold, thereby, a reinforcing material having a thickness of 0.7 mm was obtained.

In addition, abbreviations and the like in Tables 1 and 2 are shown below.

- jER828: Bisphenol A-type epoxy resin, product name "jER828", epoxy equivalent 180 g/eq., manufactured by Mitsubishi Chemical Corporation
- jER630: N,N-diglycidyl-4-glycidyloxyaniline, product name "jER630", epoxy equivalent 105 g/eq., manufactured by Mitsubishi Chemical Corporation
- DICY: Dicyandiamide, product name "DICY7", manufactured by Mitsubishi Chemical Corporation
- DCMU: 3-(3,4-Dichlorophenyl)-N,N-dimethylurea, product name "DCMU99", manufactured by Hodogaya Chemical Co., Ltd.
- Nipol1042: Acrylonitrile butadiene rubber, product name "Nipol1042", acrylonitrile content 33.5% by weight, Mooney viscosity 77.5 (ML1 + 4, 100°C), manufactured by ZEON CORPORATION
- SBR: Styrene butadiene rubber, product name "ASAPRENE T411", styrene content 30%, manufactured by Asahi Kasei Corporation

- HV-300: Polybutene rubber, product name "Nisseki Polybutene HV-300", number average molecular weight 1,400, manufactured by JX Nippon Oil & Energy Corporation

- Calcium carbonate: product name "HAKUENKA TDD", manufactured by SHIRAISHI KOGYO KAISHA, LTD.

- Carbon black: product name "CB#3050B", manufactured by Mitsubishi Chemical Corporation

- OBSH: 4,4'-Oxybis(benzenesulfonylhydrazide), product name "Celmike SX", manufactured by Sankyo Kasei Co., Ltd.

- SP-1509: Epoxy acrylate, product name "Ripoxy SP-1509", manufactured by Showa Denko K.K.

- UV7605B: Urethane acrylate, product name "Shiko UV7605B", pencil hardness: 4H, functional group number: 6, manufactured by The Nippon Synthetic Chemical Industry Co., Ltd.

- DMAAm: N,N-dimethylacrylamide, Tg = about 120°C, manufactured by KJ Chemicals Corporation

- P2HA: Phenoxy diethylene glycol acrylate, product name "Light Acrylate P2HA", Tg = about -20°C, manufactured by Kyoeisha Chemical Co., Ltd.

- IBXA: Isobornyl acrylate, Tg = about 97°C, manufactured by Osaka Organic Chemical Industry Ltd.

[Table 1]

| Blending formulation | | Example 1 | Example 2 | Example 3 | Example 4 |
|---|---|---|---|---|---|
| Epoxy resin | jER828 | 100 | 100 | 100 | 90 |
| | jER630 | | | | 10 |
| Curing agent | DICY | 6.25 | 6.25 | 6.25 | 6.25 |
| Curing accelerator | DCMU | 1.25 | 1.25 | 1.25 | 1.25 |
| Polyfunctional monomer | SP1509 | 1.5 | 1.5 | 1.5 | |
| | UV7605B | | | | 1.5 |
| Monofunctional monomer | P2HA | 13.5 | | | |
| | IBXA | | 13.5 | | |
| | DMAAm | | | 13.5 | 13.5 |
| Polymerization initiator | IRGACURE819 | 0.3 | 0.3 | 0.3 | 0.3 |
| Sheet-like fiber substrate (A) | | Plain weave glass cloth (weight per unit area: 203 g/m$^2$) | | | |
| Sheet-like fiber substrate (B) | | Glass non-woven fabric (weight per unit area: 53 g/m$^2$) | | | |
| Bending strength improvement rate (%) | 1 mm displacement | 140 | 137 | 150 | 150 |
| | Maximum point | 270 | 312 | 297 | 290 |
| Strain energy (N•m) | | 1.37 | 1.73 | 1.59 | 1.75 |
| Pressure-sensitive adhering force (N/m$^2$) | | 0.09 | 0.06 | 0.09 | 0.04 |
| Restorability | | ○ | ○ | ○ | ○ |
| Basis weight (g/m$^2$): thickness = 0.7 mm | | 901 | 809 | 898 | 764 |

[Table 2]

| Blending formulation | | Comparative Example 1 | Comparative Example 2 |
|---|---|---|---|
| Epoxy resin | jER828 | 80 | 80 |
| Curing agent | DICY | 5 | 5 |
| Curing accelerator | DCMU | 1 | 1 |
| NBR rubber | Nipol1042 | 20 | 20 |
| SBR rubber | T411 | 5 | 5 |
| Polybutene rubber | HV300 | 10 | 10 |
| Filler | Talc | 100 | 100 |
| | Ca Carbonate | 50 | 50 |
| | Carbon black | 1 | 1 |
| Blowing agent | OBSH | 2 | |
| Sheet-like fiber substrate (A) | | Satin weave glass prepreg (weight per unit area: 352 g/m$^2$) | |
| Bending strength improvement rate (%) | 1 mm displacement | 240 | 130 |
| | Maximum point | 188 | 158 |

(continued)

| Blending formulation | Comparative Example 1 | Comparative Example 2 |
|---|---|---|
| Strain energy (N•m) | 0.28 | 0.29 |
| Pressure-sensitive adhering force (N/m$^2$) | 0.27 | 0.27 |
| Restorability | $\times$ | $\times$ |
| Basis weight (g/m$^2$): thickness = 0.7 mm | 961 | 1015 |

From Tables 1 and 2, it is seen that the reinforcing materials in Examples 1 to 4 secure lightness and rigidity, have the great breaking strain, and can impart toughness to the metal panel by heat curing, while exhibiting a sufficient provisional adhering force due to tackiness at the initial state.

**Claims**

1. A metal panel reinforcing material comprising:

   a resin composition including a plastic component that has at least curability and is for a crosslinked polymer matrix, a curing agent for said plastic component, a curing accelerator for said plastic component, and a crosslinked polymer matrix; and
   a sheet-like fiber substrate,
   wherein
   when said metal panel reinforcing material is stuck to a metal panel having a thickness of 0.8 mm and heated to be integrated into a reinforced metal panel, said metal panel reinforcing material exhibits the following properties to said metal panel:
   in three-point bending measured at a span of 100 mm,

   (i) a strength improvement rate of strength at 1 mm displacement is 120% or more,
   (ii) a maximum strength improvement rate is 200% or more, and
   (iii) a strain energy up to a maximum point is 0.5 N•m or more.

2. The metal panel reinforcing material according to claim 1, wherein said metal panel reinforcing material exhibits a pressure-sensitive adhering force of 0.01 to 0.5 N/mm$^2$.

3. The metal panel reinforcing material according to claim 1, wherein said sheet-like fiber substrate is a laminate of different two or more sheet-like fiber substrates selected from a non-woven fabric and a woven fabric composed of an inorganic fiber or an organic fiber.

4. The metal panel reinforcing material according to claim 1, wherein said sheet-like fiber substrate is a woven fabric or a unidirectional cloth of an inorganic fiber and is positioned on one side surface layer of the metal panel reinforcing material.

5. The metal panel reinforcing material according to claim 1, wherein said crosslinked polymer matrix is a copolymer of a monofunctional monomer containing one polymerizable functional group and a polyfunctional monomer containing two or more polymerizable functional groups.

6. The metal panel reinforcing material according to claim 1, wherein said plastic component is a liquid epoxy-based resin exhibiting a viscosity in a range of 500 to 30,000 mPa•s at a temperature of 25°C, and said liquid epoxy-based resin contains at least one component having a benzene skeleton.

7. The metal panel reinforcing material according to claim 1, wherein said curing agent contains at least dicyandiamide.

8. The metal panel reinforcing material according to claim 1, wherein said curing accelerator is an amine-based or imidazole-based curing accelerator.

9. The metal panel reinforcing material according to claim 1, wherein said metal panel is selected from a steel plate and an aluminum alloy plate having a thickness of 3 mm or less.

10. A method for reinforcing a metal panel, the method comprising:

sticking the metal panel reinforcing material according to claim 1 to a metal adherend for temporal tacking; and heat-curing a resulting material at 150 to 250°C.

## INTERNATIONAL SEARCH REPORT

| | International application No. |
|---|---|
| | PCT/JP2016/074152 |

**A. CLASSIFICATION OF SUBJECT MATTER**

$C08J5/24(2006.01)i$, $B32B5/10(2006.01)i$, $B32B7/02(2006.01)i$, $B32B15/08$ $(2006.01)i$, $C08J5/04(2006.01)i$, $C09J5/06(2006.01)i$, $C09J7/02(2006.01)i$, $C09J7/04(2006.01)i$, $C09J157/00(2006.01)i$, $C09J163/00(2006.01)i$,

According to International Patent Classification (IPC) or to both national classification and IPC

**B. FIELDS SEARCHED**

Minimum documentation searched (classification system followed by classification symbols)
C08J5/04-C08J5/10, C08J5/24, B32B1/00-B32B43/00, C09J5/06, C09J7/02, C09J7/04, C09J157/00, C09J163/00, C09J201/00

Documentation searched other than minimum documentation to the extent that such documents are included in the fields searched
　　　Jitsuyo Shinan Koho　　　　　　1922-1996　　Jitsuyo Shinan Toroku Koho　　1996-2016
　　　Kokai Jitsuyo Shinan Koho　　1971-2016　　Toroku Jitsuyo Shinan Koho　　1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-105668 A　(Nitto Denko Corp.), 08 May 2008 (08.05.2008), entire text & US 2010/0178482 A1 entire text & EP 2072340 A1　　　　　& CN 101516680 A | 1-10 |
| A | JP 7-2978 A　(Sekisui Chemical Co., Ltd.), 06 January 1995 (06.01.1995), entire text (Family: none) | 1-10 |
| A | JP 61-78843 A　(Mitsubishi Gas Chemical Co., Inc.), 22 April 1986 (22.04.1986), entire text (Family: none) | 1-10 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 October 2016 (14.10.16) | 25 October 2016 (25.10.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2016/074152

Continuation of A. CLASSIFICATION OF SUBJECT MATTER
(International Patent Classification (IPC))

*C09J201/00*(2006.01)i

(According to International Patent Classification (IPC) or to both national
classification and IPC)

Form PCT/ISA/210 (extra sheet) (January 2015)

**INTERNATIONAL SEARCH REPORT**

International application No.

PCT/JP2016/074152

The invention in claim 1 relates to a metal panel reinforcement material comprising any curable plastic component and any crosslinked polymer matrix, when said metal panel reinforcement material is bonded to a metal panel of 0.8 mm in thickness and thermally integrated to give a reinforced metal panel, said reinforced metal panel satisfying specific requirements in mechanical properties in a three-point bending test. As the curable component that imparts plasticity to the crosslinked polymer matrix and is curable *per se*, however, the description of the present application exclusively discloses an epoxy resin. As the crosslinked polymer matrix, similarly, the description of the present application exclusively discloses a crosslinked (meth)acrylic resin that is usable in an amount of 0.5 parts by mass, - - - 15 parts by mass per 100 parts by mass of the plastic component.

In the technical field of fiber-reinforced resin composites, however, it is widely known without needing examples that the strength and toughness of a fiber-reinforced composite largely vary depending on the kind and ratio of a curable plastic component and crosslinked polymer matrix used therein. Therefore, it is seemingly common general technical knowledge as of the filing that the mechanical properties in a three-point bending test of a reinforced metal panel, that are improved by a metal panel reinforcement material comprising a fiber-reinforced resin composite, highly depend on the kind and ratio of a curable plastic component and crosslinked polymer matrix used therein.

In a system using a curable plastic component and a crosslinked polymer matrix other than those respectively disclosed in the description of the present application, therefore, it appears that a person skilled in the art cannot understand how to embody the invention in claim 1 of the present application.

Consequently, the description of the present application is not clearly and fully set forth to such a degree that a person skilled in the art can work the invention of claim 1 of the present application, and therefore does not comply with the requirement of support prescribed under PCT Article 5.

With respect to the metal panel reinforcement materials disclosed in inventions in claim 1 and claims 2-10 depending on claim 1, no meaningful search can be made on metal panel reinforcement materials other than "those comprising an epoxy resin as a curable plastic component and a crosslinked (meth)acrylic resin that is usable in an amount of 0.5 parts by mass, - - - 15 parts by mass per 100 parts by mass of the plastic component as a crosslinked polymer matrix" and, therefore, no search was made thereon.

Form PCT/ISA/210 (extra sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005139218 A

- JP 2008105688 A

**Non-patent literature cited in the description**

- Review Epoxy Resins Fundamentals. The Japan Society of Epoxy Resin Technology, 2003